# EUROPEAN PATENT SPECIFICATION

(11) **EP 1 976 693 B1**
(45) Date of publication and mention of the grant of the patent: **26.07.2023**
(21) Application number: 07700408.3
(22) Date of filing: 02.01.2007
(51) Int. Cl.: B32B 17/10, B60J 1/00, B62D 25/06

(54) **GLAZINGS**
VERGLASUNGEN
VITRAGES

(30) Priority: 03.01.2006 GB 0600022
(43) Date of publication of application: 08.10.2008
(73) Proprietor: Pilkington Group Limited, Nr. Ormskirk Lancashire L40 5UF (GB)
(72) Inventor: WINSTANLEY, Neil, St Helens Merseyside WA10 6HL (GB); DURBIN, Neil, Preston Lancashire PR4 6AP (GB)
(74) Representative: Fortt, Simon Merton
(86) International application number: PCT/GB2007/050001
(87) International publication number: WO 2007/077460

(56) References cited:
- EP-A- 1 253 461
- WO-A-2005/007398
- WO-A1-2005/075784
- GB-A- 908 338
- GB-A- 1 359 165
- JP-A- 2003 055 007
- US-A- 3 839 171
- US-A- 5 773 102
- US-A1- 2 946 711
- US-A1- 4 511 627
- US-A1- 2004 098 946
- US-B1- 6 432 522

## Description

The present invention relates, *inter alia,* to automotive glazings, especially to laminated automotive glazings.

Glazings used in automotive vehicles, such as cars, (for example vehicle door and side windows) are typically made from single plies of glass that have been tempered or toughened. Tempering or toughening may be by a chemical treatment (e.g. by ion exchange chemical treatment, so as to replace small size ions in surface areas of the glass with larger size ions, or by a heat treatment involving rapid quenching of the glass. The use of heat and chemicals, as well as the combination of heat and chemical treatment, is well known in the art. Tempering or toughening to varying degrees can be performed. For example, semi-tempered or semi-toughened glass is well known in the art. Glass may also be annealed, where after heating, the glass is cooled gradually to avoid the formation of stresses and strains.

The glass used in automotive windows must be relatively thin so as to reduce weight above the centre of gravity of vehicle and/or to increase performance. One problem concerning the use of tempered or toughened glass, in particular, in door and side windows, is its poor intruder resistance. Once a non-laminated tempered glass pane is broken, it loses virtually all of its mechanical strength and is very easy to penetrate. There are major technical difficulties in producing relatively thin glazing that meets international impact resistance standards. Furthermore, there are safety issues because of the possibility of injury from flying glass.

There are also major security issues due to the risk of thefts from automobiles. Indeed, there has been a significant increase in thefts in many countries, even from occupied vehicles. There is also a major risk of theft from unoccupied vehicles. Again, a tempered glass door window of an automotive vehicle will generally offer little mechanical resistance once broken, so a thief can smash the window with a sharp instrument, reach into the vehicle, steal an item and then escape, all within a few seconds. Even if the vehicle has an alarm fitted, in practice, this offers little protection.

Laminated glazings do not suffer from such drawbacks, as they offer increased intruder resistance.

Laminated glazings comprising two plies of glass which are, typically annealed or semi-toughened, and a PVB (polyvinyl butyral) interlayer, are well known in the art and are widely used for safety glass. PVB is formed by reacting butyraldehyde with polvinyl alcohol to produce a polyvinyl butyral base layer. The degree of polymerisation can be varied by varying the reaction conditions, but generally the PVB resin interlayer will include a certain percentage of unreacted hydroxyl groups. A plasticizer will normally also be incorporated. Depending upon the nature and purpose of the laminate glazing, the concentration of plasticizer can vary.

The PVB interlayer prevents glass fragments from dispersing after the glass has been broken and therefore reduces the risk of injury from fragments of flying glass. It also provides a degree of mechanical strength, even after glass has been broken. Laminate glazings comprising a PVB interlayer have therefore found many applications where it is important to ensure a degree of resistance to penetration even after glass breakage. These applications include shop windows, display cabinets, roof glazing, military and security vehicle glazing, aircraft glazing, etc.

However, it is not possible to merely substitute a laminated glazing into the mounting gap provided in a vehicle designed to receive a toughened or tempered single pane glazing, especially in the case of door and side windows. For example, typical door gaps in cars in Europe are nominally 4 mm (typically 3.9 mm), and 5 mm in North America. As the typical thickness of the interlayer used in laminated glazings is approximately 0.76 mm, it is necessary to use plies of glass panes having a thickness of 1.6 mm to ensure that the laminated glazing fits into a standard 4 mm door gap (the gap in the door frame) or side panel gap. Such door and panel gaps cannot be easily widened or redesigned. Similar difficulties exist in replacing other automotive glazings, such as backlights, rooflights and windscreens. There are also technical difficulties in producing thin plies of annealed, tempered or toughened glass. During the annealing process, it is hard to achieve the necessary temperature differential between the inner and outer parts of the glass for thin plies.

A similar problem arises in attempting to replace some existing laminated glazings. Such glazings, for example, certain windscreen constructions, require plies of thin glass (typically 1.6 mm in thickness), the production of which are subject to the technical difficulties mentioned above.

Techniques for producing PVB laminated safety glazing are well known in the art and are disclosed, for example, in US 2,526,728.

US 3,437,552 describes an alternative PVB laminated glazing in which a rigid inner PVB sheet is adhered to two outer glass plies by means of a PVB adhesive. The PVB sheet is substantially free of plasticizer. The adhesive contains plasticizer, but substantial migration of plasticizer from the adhesive into the rigid sheet is prevented by ensuring that the hydroxyl content of the rigid sheet is relatively high when compared to that of the adhesive. The examples disclose the production of PVB safety glass laminates having a thickness greater than 7 mm.

Alternating plies of glass and PVB interlayers have been used to produce relatively thick glazing that is bullet-resisting. This is described in US 4,130,684, for example, where the glazing is indicated to be suitable for use in tanks and military aircraft. It is referred to therein as "Multiplate" ^{™} safety glass.

PVB laminated glass has been proposed in US 5,227,241 for use in the windscreens of aircraft such as the Airbus ^{™} and Airbus A320 ^{™} , which operate at high altitude. Aircraft windscreens are required not only to remain structurally intact at the extreme temperatures and pressures encountered by aircraft, but also to maintain resistance against bird impact and good visibility. US 5,227,241 discloses an aircraft windscreen containing several plies of PVB located between two plies of tempered glass, so as to produce a thick but strong laminate. The plasticizer content of the plies of PVB next to the plies of glass in the laminate structure is greater than the plasticizer content of the inner plies of PVB.

PVB laminated glazings has also been widely used for windscreens in the automotive vehicle industry, although the technical considerations here are very different from those in the aircraft industry, and a variety of alternatives have been suggested. Frequently only a single layer of PVB is used in laminated glazings in the automotive industry, although there are some instances where more than one PVB layer has been used.

For example, US 3,178,334 discloses a safety glass laminated glazing for use in an automotive vehicle windscreen that has two PVB layers with differing hydroxyl contents. This is said to provide increased strength relative to using a single PVB layer having the combined thickness of the two interlayers and a hydroxyl content that is the average of the two PVB layers.

EP 1 022 727 B1 also discloses a safety glass laminated glazing for use in an automotive vehicle windscreen in which two PVB layers are used. The PVB layers have better adhesion to the glass of the laminate than to each other. This is said to provide improved performance when the glass is deformed by an impact, because, although the layers may separate from each other, they will each still remain attached to a glass pane. Structural integrity is therefore maintained at the PVB-glass interfaces and the laminated glazing will still function as safety glass.

US 3,868,286 describes a method for producing a tinted PVB composite interlayer for use in an automotive vehicle windscreen. A tinted colour gradient is provided by printing an appropriate pattern of ink dots onto an inner face of a sheet of PVB material. Another layer of PVB material is then positioned adjacent the printed PVB layer and the two adjacent PVB layers are laminated together under heat and pressure using heated rollers. The composite interlayer can then be used in a conventional manner to produce a PVB glass laminated windscreen.

US 2 946 711 discloses a safety glass laminate having a total thickness of 4.57 mm to 9.4 mm comprising two outer layers of glass bonded to a central layer of plasticized PVB, the total thickness of the two layers of glass being from 2.54 mm to 6.35 mm and the thickness of the central layer being from 0.76 mm to 3.05 mm.

It will be appreciated from the above summary of the art that PVB laminated glazing has been used for a wide range of applications. However, none of the laminated glazings described above can be simply substituted for a single ply toughened or tempered glazing in an automotive vehicle. It would also be advantageous to provide alternative laminated glazings to those already in existence, which did not require the use of thin plies of annealed, semi-toughened or semi-tempered glass.

The present invention aims to overcome or at least to alleviate, at least some of the foregoing problems associated with the use of toughened and tempered glazings in vehicle door windows and side windows.

The invention provides an automotive glazing having a thickness suitable for use as a replacement for a single ply toughened or tempered glazing in a vehicle, the glazing consisting of first and second plies of a glazing material having an interlayer therebetween; characterised in that the glazing meets at least one of the following tests:
a) test 9 of ANSI standard Z26.1 (1996) using a 196 to 201 g steel dart dropped from a height of 9.14 metres;
b) test 12 of ANSI standard Z26.1 (1996) using a 224 to 230 g steel ball dropped from a height of 9.14 metres; and
c) the ball-impact test of ECE Regulation number 43 for a 225 to 229 g steel ball dropped from a height of 5 metres; and wherein

the glazing passes ECE Regulation 43 standard for penetration resistance of laminated windscreens using a 2.26 kg ball that is dropped from a height of 4.0 metres, or passes the corresponding ANSI Z26.1 standard, where the drop height is 3.66 metres; and wherein
the glazing material is one of annealed, semi-toughened or semi-tempered glass;
each of the first and second plies are 1.6 mm or 1.8 mm thick; and
the thickness of the interlayer is 0.3 mm and 0.65 mm; and wherein
the glazing is from 3.5 mm to 4.3 mm thick;
the interlayer is a PVB (polyvinylbutyral) interlayer; and
the interlayer is a single-layer interlayer.

The advantage of the automotive glazing of the invention is that it can be used to replace existing toughened or tempered glazings in a car, without the need to use thin glazing materials, for example 1.6 mm glass, and therefore without the manufacturing and processing difficulties associated with thin glass, but also, surprisingly, the glazing meets the relevant impact resistance standards. Such glazings find particular used in replacing side and door windows in cars. Such glazings have improved intruder resistance, compared with existing toughened or tempered windows, which is available for use in both OE (original equipment) and AGR (after-market glass replacement) markets. Additionally, the glazing may also be used to replace existing automotive laminated glazings, such as windscreens, which require the use of thin plies of glass.

Preferably, the single ply toughened or tempered glazing is a door or side window. The interlayer is a PVB (polyvinyl butyral) interlayer and is a single-ply interlayer.

Preferably, the automotive glazing passes all of the tests a) to c). The automotive glazing also passes ECE Regulation 43 standard for penetration resistance of laminated windscreens using a 2.26 kg ball that is dropped from a height of 4.0 metres, or passes the corresponding ANSI Z 26.1 standard, where the drop height is 3.66 metres. In addition, the automotive glazing may also have a mean break height of at least 4.5 m when impacted by a 2.26 kg ball.

The automotive glazing may be less than 4.3 mm thick, or more preferably, from 3.9 mm to 4.1 mm thick. The interlayer is between 0.30 mm and 0.65 mm thick.

At least one of the first and second plies of glazing material may be greater than 1.6 mm thick. Preferably, at least one of the first and second plies of glazing material is 1.8 mm thick.

The glazing material is one of annealed, semi-toughened or semi-tempered glass.

An automotive vehicle component comprising the automotive glazing is disclosed. The automotive glazing may be a door window or a side window. The automotive vehicle component may be a door, or a window for a door. The automotive glazing may be a windscreen, a rooflight or a backlight.

An automotive vehicle comprising the automotive glazing of the invention is also disclosed. A method comprises fitting an automotive glazing of the invention to an automotive vehicle, to an automotive vehicle component, or to a part thereof. The method may be used in the manufacture of the vehicle or component. The automotive glazing may be used as a replacement part or as or a substitute part.

A method of making an automotive glazing, comprises placing an interlayer that is less than 0.76 mm thick between two plies of a glazing material and laminating the interlayer and the glazing material together, wherein the resultant glazing is less than 5 mm thick, wherein the glazing meets at least one of the following tests: a) test 9 of ANSI standard Z26.1 (1996) using a 196 to 201 g steel dart dropped from a height of 9.14 metres; b) test 12 of ANSI standard Z26.1 (1996) using a 224 to 230 g steel ball dropped from a height of 9.14 metres; and c) the ball-impact test of ECE Regulation number 43 for a 225 to 229 g steel ball dropped from a height of 5 metres.

Preferably, the interlayer is a PVB (polyvinyl butyral) interlayer. Preferably, the interlayer is a single-layer interlayer. Preferably, the automotive glazing is less than 4.3 mm thick.

The invention also provides a use of the automotive glazing as a replacement for or substitution for, a single ply tempered or toughened in a vehicle.

The invention will now be described by way of example only, with reference to the accompanying drawing in which:

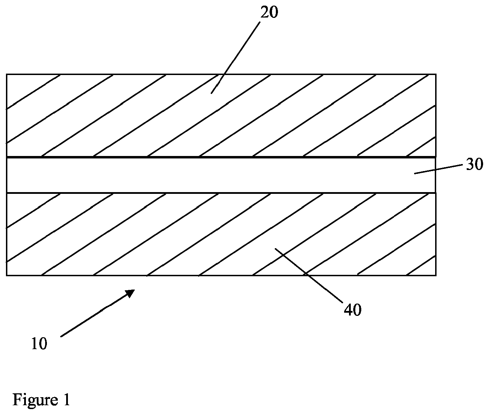

Figure 1 shows a cross-section of a laminate in accordance with an embodiment of the present invention.

As discussed above, one issue with the replacement of plies of toughened or tempered glass as door and side windows in cars with laminated glazings, is the need for the glazing to fit into the standard window mounting, such as a door gap, of the vehicle. This is particularly important in the AGR (aftermarket glass replacement) market, where any replacement glazing must fit into the mounting already existing in the vehicle. In addition, in the OE (original equipment) market, it is extremely difficult to redesign a door, panel or other mounting to offer the use of laminated glazing as an option.

The present invention represents a major breakthrough, because it can be used to provide a laminate glazing that is thin enough to fit into the narrow gap of an existing automotive vehicle frame for receiving glazing, but still meets international impact resistance standards, and avoids the need to use very thin glass.

Referring now to Figure 1, there is shown a laminated glazing 10 of the present invention comprising a first glass ply 20, and a single-ply PVB interlayer 30 and a second glass ply 40. The glass plies 20, 40 may be annealed, semi-toughened or semi- tempered. The thickness of the PVB interlayer 30 is less than 0.76 mm, and the overall thickness of the laminated glazing less than 4.3 mm.

The laminated glazing 10 is typically produced by placing the PVB interlayer 30 between the plies of glass 20, 40 and laminating under heat and pressure and/or by using heat and vacuum to force the layers together. Alternatively, rollers or adhesion-based techniques can be used.

If desired, the PVB interlayer and/or the glass plies may be shaped/cut to size before lamination.

Once the laminated glazing 10 has been made it is allowed to cool and can then be tested for impact resistance by any of the methods described in the following examples.

PVB adheres extremely well to glass. However, whilst a certain level of adhesion between the PVB and the glass is necessary to prevent delamination, too much adhesion can also create problems in an impact test. If the level of adhesion between the PVB and the glass is too high, natural movement of the laminated glazing on impact is restricted. This results in the laminated glazing being brittle, leading to a reduce impact strength. High adhesion also encourages crack propagation on impact.

The adhesion of the PVB to the glass ply may be determined by the amount of an adhesion control salt spread on the surface of the PVB or by pummel measurements. Adhesion of the PVB to the glass ply occurs by hydrogen bonding, and adhesion control salts (typically organic calcium magnesium salts) reduce the amount of hydrogen bonding that can occur by blocking OH sites on the surface of the glass ply. The adhesion of the PVB is also controlled by the moisture content of the PVB, hence the humidity of the room in which the laminated glazing is assembled is carefully controlled.

Pummel is a measurement of the adhesion of the PVB to the glass ply, and is commonly used as a measure the quality of a laminated glazing. The laminated glazing is cooled to - 18°C, placed on a metal support and shattered using a hammer weighing 500g. The amount of glass that detaches from the interlayer is used to provide a measure of adhesion between 0 (no adhesion) and 10 (complete adhesion), as described in GB 1 093 846.

### Test 1: ANSI Z26.1 1996 Standard

Testing of the laminated glazing is performed according to test number 9 and test no 12 from the ANSI Z26.1 1996 standard. These tests are summarised in parts i and ii below. Both of these tests must be passed if the above ANSI standard is to be met:

### (i) Test number 9: Dart impact test using a 196 to 201 g dart

This test is used to assess safety glazing material under impact from a small hard object. In this test a standard steel dart used in the ANSI testing procedure is dropped once from a height of 9.14 metres onto each of five specimens. The dart weighs from 196 to 201 g.

The specimens are 305 × 305 mm square and are substantially flat. They are supported in a standard steel frame used in ANSI testing that allows the specimens to be held substantially horizontally when hit by the dart. The specimens are maintained at a temperature of 21 to 29° C for at least 4 hours immediately prior to the test and are kept separate from one another during this period.

The dart is dropped once from rest onto each specimen in a manner such that the point of the dart hits the specimen within 25 mm of the centre of the face of the specimen that is intended to be the outer face when the glazing is in use. The following criteria must be met if the glazing is to pass the test:
1) The dart is permitted to crack the specimen and even to puncture it. However any hole so produced must not be large enough so that the body of the dart can pass through the specimen.
2) No loose or detached glass pieces may leave any area of the specimen exclusive to the area punctured by the dart although small particles may disengage at/around the point of impact.
3) The glass on adjacent sides of a crack extending from an area punctured by a dart shall be held in place by reinforcing/strengthening material and no glass shall be freed from the reinforcing or strengthening material for a distance of greater than 38 mm from a crack.
4) A maximum of one out of the five specimens tested may be allowed to break into separate large pieces. Spalling of the outer glass surface opposite the point of impact and adj acent to the area of impact is not to be considered a failure.

The above dart impact test was performed on a first laminated glazing of the present invention, comprising a PVB interlayer laminated between two plies of annealed glass that were each 1.8 mm thick. The interlayer used was a standard PVB interlayer, nominally 0.6 mm thick, available from Solutia Inc, (product code RB31), and the sample test temperature was 23°C. The pummel of the interlayer material was 7. The resultant laminated glazing was 4.3 mm thick. All five samples of passed the dart test. In two cases, there was no penetration of the sample by the dart. In three cases, the tip of the dart punctured the sample.

The above dart impact test was also performed on a second laminated glazing of the present invention, comprising a PVB interlayer laminated between two plies of annealed glass. The interlayer was an automotive grade, 0.38 mm thick PVB interlayer available from Solutia Inc, (product code AR11), and having a pummel of 8.5-9. The resultant laminated glazing was 4 mm thick. The sample test temperature was 21.8°C. All five samples of the laminated glazing of the present invention passed the dart test. In three cases, the dart penetrated the sample, and was retained. In two cases, there was no penetration of the sample, or splitting of the interlayer.

### (ii) Test number 12: Ball impact test using a 224 g to 230 g ball

This test is used to assess whether safety glazing material has a minimum strength and whether it is properly made.

In this test a standard 224 g to 230 g solid smooth steel ball that is used in the ANSI testing procedure is dropped once from a height of 9.14 metres onto each of twelve specimens.

The specimens are 305 × 305 mm square and are substantially flat. They are supported in a standard steel frame used in ANSI testing that allows the specimens to be held substantially horizontally when hit by the ball. The specimens are maintained at a temperature of 21 to 29° C for at least 4 hours prior to the test and are kept separate from one another during this period.

The ball is dropped freely and from rest onto each specimen in a manner such that it hits the specimen within 25 mm of the centre of the face of the specimen that is intended to be the outer face when the glazing is in use. The following criteria must be met if the glazing is to pass the test:
1) The ball may produce cracks in the glass, but not more than two of the specimens may break into separate large pieces. Furthermore, with not more than two of the remaining specimens, shall the ball produce a hole or fracture at any location through which the ball will pass.
2) At the point immediately opposite the point of impact small fragments of glass may leave the specimen, but the affected small area shall expose less than 645 mm² of reinforcing or strengthening material, the surface of which shall always be covered with tiny particles of tightly adhering glass. Total separation of plastic from the reinforcing or strengthening material shall not exceed 1935 mm² on either side. Spalling of the outer glass surface opposite the point of impact and adjacent to the area of impact is not to be considered a failure.

The above ball impact test was performed using a first laminated glazing of the present invention, comprising a PVB interlayer laminated between two plies of annealed glass that were each 1.8 mm thick. The interlayer used was a standard PVB interlayer, nominally 0.6mm thick, available from Solutia Inc, (product code RB31), and the sample test temperature was 23°C. The pummel of the interlayer material was 7. The resultant laminated glazing was 4.3 mm thick. All twelve samples passed the ball-impact test without tearing of the interlayer. The weight of glass removed from the face opposite the point of impact varied between 0.8 and 2.3 grams. Given that the glazings comprising the 0.6mm interlayer passed both tests 9 and 12, the structure met the ANSI standard.

The above ball impact test was also performed on five samples of a second laminated glazing of the present invention, comprising a PVB interlayer laminated between two plies of annealed glass. The interlayer was an automotive grade, 0.38 mm thick PVB interlayer available from Solutia Inc, (product code AR11), and having a pummel of 8.5-9. The resultant laminated glazing was 4 mm thick. The sample test temperature was 22.2°C. Each of the five samples tested passed the impact test. In two cases, the ball was held by the sample, and a small split in the interlayer was observed. In three cases, the ball was held by the sample, but no split in the interlayer was observed. Given that the glazings comprising the 0.38mm interlayer passed test 9, and 5 glazings passed test 12, it is likely that the structure will meet the ANSI standard.

### Test 2: ECE R 43 Impact Test (Version Rev.1/Add.41/Rev.1)

It can be assumed that the laminated glazing passes the ECE Regulation 43 ball impact test detailed below, because that test is less stringent than the combination of tests 9 and 12 described above. In ECE R43, there is no dart test, and the ball-impact test drops a ball from a height of only 5 metres, compared with a drop of 9.14 metres, so that the energy of impact is lower.

A hardened steel ball with a mass of 227 + 2g and a diameter of approximately 38 mm is used and is dropped once from rest and from a height of 5 metres onto a test piece. This is repeated for each of four test pieces. The test pieces are squares, with a side that is 300 mm +10 or -0 mm (in practice, this equates to 305 mm + 5 mm) long.

Each test piece is held by a standard supporting fixture that is illustrated in the ECE regulation. The test piece is held by the fixture so that it is perpendicular, within 3°, to the incident direction of the ball. Its upper face corresponds to the outer face of the test piece when it is in use. The fixture has steel frames with machined borders 15 mm wide, fitting one over the other and faced with rubber gaskets about 3 mm thick and 15 mm wide and of a hardness of 50 IRHD. The lower frame rests on a steel box that is about 150 mm high. The test piece is held in place by an upper frame, the mass of which is about 3 kg. The supporting frame is welded onto a sheet of steel of about 12 mm thick resting on the floor, with an interposed sheet of rubber about 3 mm thick and of hardness 50 IRHD.

The test conditions are a temperature of 20 + 5 °C , a pressure of 860 to 1,060 mbar and a relative humidity of 60 + 20 per cent. The test piece is maintained under these conditions for at least four hours immediately preceding the test. The point of impact of the ball is within 25 mm of the geometric centre of the test piece.

In order to pass the test either all of the following conditions must be met, or no more than two tests four may give an unsatisfactory result. In the latter case a further series of tests carried out on a new set of test pieces should give satisfactory results.
1) The ball does not pass through the test piece;
2) The test piece does not break into several fragments;
3) The total weight of the few fragments which may be produced in the side opposite to the point of impact does not exceed 15 g.

Five samples of laminated glazings comprising a PVB interlayer laminated between two plies of annealed glass were tested in accordance with the above ball impact test. The interlayer used was an automotive grade, 0.38 mm thick PVB interlayer available from Solutia Inc, (product code AR11) and having a pummel of 8.5-9. The resultant laminated glazing was 4 mm thick. The test temperature of the samples was 21.6°C. All five samples passed the test, with the ball being held by the sample and no split detected in the interlayer in each case.

### Test 3: Mean Break Height Test

A convenient alternative to the tests described above is given in test 3, whereby the mean break height (MBH) of a laminate is determined using the 2.26 kg ball and frame that are used in the foregoing standards. Laminates achieving a mean break height of at least 5 metres in the method described in test 3 will meet both of the above standards for penetration resistance. The method described in test 3 is convenient not only for assessing if the laminated windscreen impact-resistance standards will be met, but also for providing useful quantitative information to establish mean break heights. For example, a mean break height of above 6 metres indicates that a laminate has very good penetration resistance and will pass both of the foregoing standards by a very wide margin. The test method is performed using a 2.26 kg ball and a standard 305 mm × 305 mm test frame as specified in the 2.26 kg ball impact test for laminated windscreens under ECE regulation 43. However, unlike the test under ECE regulation 43 and (the corresponding ANSI standard for laminated windscreens) the present method provides a mean break height and therefore gives a useful indication as to the degree of impact resistance of a given laminate (rather than simply providing a single pass/fail result). The test is therefore quantitative rather than qualitative, and can be used to determine whether a laminate will meet ANSI Z26.1 and ECE R43.

305mm squares are cut out from finished laminates. If the laminates are curved then the samples are cut from the flattest part of the laminate (and from the same region for each laminate). The samples are stored at 23+ 2 °C for a minimum of four hours immediately prior to testing. A minimum of 12 samples are used in the test. (If more samples are used more accurate results can be obtained).

The samples are held in a horizontal position using the standard test frame. If the samples have a concave side then this side faces upwards.

The first sample is positioned at a distance of an estimated mean break height below the position from which the 2.26 kg ball is dropped from a drop rig. The sample passes the test at that height if the ball is retained by the sample for more than 5 seconds. The sample fails at that height if the ball passes through the sample in less than 5 seconds.

If the sample passes at a given height then the process is repeated for the next sample with the ball at a position 0.25 m higher; whereas if it fails the test is repeated with the ball at a position 0.25 m lower. The process is repeated with the following provisos:
1) If a sample passes, but the ball passes through after 5 seconds but before 10 seconds, or if it is easier to push the ball through the sample than pull it from the sample, the next sample should be tested from the same height.
2) Conversely, if a sample fails, but it took between 1 and 5 seconds for it to penetrate, then the next sample should again be tested from the same height.
3) If the first sample passes/fails badly then the drop height can be adjusted by 0.50 metres rather than 0.25 metres.

Once all samples have impacted, the results are tabulated to show the percentage pass at each test height. A graph of impact height vs. percentage pass is produced and a least squares analysis is performed. The mean break height is determined from a graph of impact height vs. percentage pass. It is the height at which the line of best fit is intersected by the 50% pass line.

The highest pass and lowest failure results can also be recorded and are useful in giving an indication of sample variability.

A series of 17 samples comprising two 1.8 mm thick 305 mm × 305 mm square sheets of glass, having an interlayer laminated therebetween were tested to determine their mean break height. The interlayer used was a standard PVB interlayer, nominally 0.6mm thick, available from Solutia Inc, (product code RB31), and the sample test temperature was 23°C. The pummel of the interlayer materials was 7. The resultant laminated glazing was 4.3 mm thick.

The mean break height of the samples tested was 4.6 m.

The performance of laminates in the mean break height test gives a quantitative indication of the impact resistance of the laminate. The results also allow statistical prediction of whether the laminates would meet both ANSI Z26.1 (1996) and ECE R43 standards.

When the mean break heights and number of samples achieving that height are plotted, a normal distribution is produced. In order to satisfy ANSI Z26.1 (1996), a glazing must have a break height of at least 3.6m, and in order to satisfy ECE R43, a break height of at least 4m. In order to ensure that both tests are passed, a minimum mean break height of 4.5 m should be achieved. From the above results, laminated glazings of the present invention comprising two 1.8 mm thick glass plies and an interlayer having a nominal thickness of 0.6 mm are likely to meet both ANSI Z26.1 (1996) and ECE R43 standards.

A suitable thickness for a laminated glazing to be used to replace a single ply toughened or tempered automotive glazing is between 3.5 mm and 4.3 mm, based on a nominal thickness of the ply of 4 mm (3.9 mm typical thickness + 0.39 mm). Such a range of thicknesses is particularly suitable for the replacement of door and side windows in cars. Therefore, laminated glazings of the present invention have an overall thickness in the range 3.5 mm to 4.3 mm. Preferably, the overall thickness of the laminated glazing is in the range 3.8 mm to 4.2 mm, preferably between 3.9 mm and 4.1 mm, and more preferably the thickness is about 4 mm.

However, the principle of using a thinner interlayer can be used in existing laminated glazings, to give an advantageously thinner construction without the need to use thinner plies of glass. As discussed above, the production of thin plies of annealed, semi-toughened or semi-tempered glass (such as 1.6 mm thick plies) is difficult, and therefore expensive.

Thicker plies of glass, such as 1.8 mm and 2.1 mm are much easier to produce. For example, the windscreen of an automotive vehicle may typically be of the construction 2.1/0.76/1.6 or 1.8/0.76/1.8 (glass/interlayer/glass, all in mm). By using a thinner interlayer, either the overall thickness of the laminated glazing may be reduced, or thickness of the plies of glass in the interlayer increased. This enables existing laminated automotive glazings, having thin plies of glass in the laminate, to be replaced. Therefore, the overall thickness of a laminated glazing in accordance with the present invention is from 3.5 mm to 4.3 mm, depending on the thickness of the existing glazing it is desired to replace.

Laminated glazings made in accordance with the present invention as described above show it is possible to use a thinner interlayer (less than 0.76 mm in thickness) with thicker plies of glass, in place of using thinner plies of glass with a standard 0.76 mm interlayer to form a laminated glazing that meets international impact resistance standards. When such a glazing is in the above range of thicknesses, it is suitable for replacing a toughened or tempered single ply automotive glazing.

For example, according to the present invention, it is possible to use a laminated glazing formed of 1.8 mm glass plies and a 0.6 mm (nominal thickness) interlayer, rather than a laminated glazing formed of 1.6 mm glass plies and a 0.76 mm interlayer, to replace a single ply toughened or tempered automotive glazing, for example, the glazing in a side or door window in a car.

Such a result is surprising, as it has not previously been considered possible that such thinner standard interlayers could be used in laminated glazings that meet international resistance standards.

In addition, it has also been found to be possible to replace a single ply toughened or tempered automotive glazing with a laminated glazing comprising a 0.38 mm automotive grade standard PVB interlayer and two plies of glass, 1.8 mm in thickness. This result is particularly surprising as such 0.38 mm PVB interlayers are not intended to be used as a single layer interlayer in a laminated glazing, but are intended to be laminated with at least one further interlayer. For example, two automotive grade 0.38 mm standard PVB interlayers are laminated either side of a Siglasol interlayer (a polyethylene terephthalate (PET) substrate having an electrically conductive coating) to form a solar control interlayer in a laminated glazing. It is therefore extremely surprising that a single 0.38 mm interlayer could be used to form a laminated glazing, suitable for replacing a single ply toughened or tempered automotive glazing and still meet international impact resistance standards.

Table 1 provided below is useful for illustration purposes. It shows the total thickness of particular laminated glazings of the present invention comprising a 0.60 mm thick PVB interlayer and various combinations of standard glass plies of 1.6, 1.8 or 2.1 mm thickness.

**Table 1: Thickness of glass plies and total thickness of laminated glazings for a 0.60 mm interlayer.**

| Thicknesses of the two glass plies of laminate (mm) | Total thickness of the laminated glazings (mm) |
|---|---|
| 1.6/1.6 | 3.8 |
| 1.6/1.8 | 4.0 |
| 1.6/2.1 | 4.3 (not according to the invention) |
| 1.8/1.8 | 4.2 |
| 1.8/2.1 | 4.4 (comparative) |
| 2.1/2.1 | 4.8 (comparative) |

It will be appreciated from the above table that the thickness of preferred laminated glazings of the present invention will vary with the thickness of glass ply used. Of course, the thickness of the PVB interlayer can be significantly below 0.60 mm and the overall thickness of the laminated glazings can vary accordingly.

Laminated glazings of the present invention can be used in different automotive applications, such as windscreens, backlights, rooflights, side windows and door windows. The laminated glazings may also be used in any part or component of an automotive vehicle where glazing is desired.

In order to avoid the manufacturing issues described above, the glass plies of the laminated glazing should each be greater than 1.60 mm in thickness. Preferably, the plies may each be 1.80 mm in thickness. Mixed thicknesses are also possible, where one glass ply of the laminate may be thicker than the other glass ply. It is preferred that each of the glass plies are of the same thickness. These preferred thicknesses, in conjunction with the use of an interlayer 0.3 mm to 0.65 mm thick, enable the laminated glazing to fit into a standard automotive vehicle glass mounting having a gap of about 4 mm for receiving glazing. Such mountings are commonly found in door frames and side panels.

Coatings may also be present on the plies of glass. This may be done so as to reduce heating by solar radiation, to reduce noise levels within the vehicle or to reduce glare/dazzle. Such glass coatings are all well known in the art.

Additional components/layers may also be provided within the laminated glazings. For example, an electrical conductor may also be provided (to provide heating, sensing or alarm functions); one or more interlayers may be provided (to aid in reducing the transfer of heat, sound or light); or adhesives or other chemical components may be present (in order to facilitate improved lamination).

The precise nature of any additional coating/component/layer is not crucial, provided the laminated glazing itself meets the requirements set out herein.

Shaping of the laminated glazing can be performed by any suitable method, including cutting, grinding, moulding, thermal shaping, laser cutting. The glass plies used may be curved or bent.

As discussed above, laminated glazings of the present invention are particularly preferred for use in an automotive vehicle. The term "automotive vehicle" is used herein to cover cars, vans, off-road vehicles, motorbikes, motor scooters, electronically powered vehicles, lorries, buses, fire engines, trams, farm vehicles, trains, trucks and the like. For the purposes of the present invention, aircraft and space vehicles are outside the definition of "automotive vehicle".

## Claims

1. An automotive glazing having a thickness suitable for replacing a single ply toughened or tempered glazing in a vehicle, the glazing consisting of first and second plies of a glazing material having an interlayer laminated therebetween; **characterised in that** the glazing meets at least one of the following tests:
a) test 9 of ANSI standard Z26.1 (1996) using a 196 to 201 g steel dart dropped from a height of 9.14 metres;
b) test 12 of ANSI standard Z26.1 (1996) using a 224 to 230 g steel ball dropped from a height of 9.14 metres; and
c) the ball-impact test of ECE Regulation number 43 for a 225 to 229 g steel ball dropped from a height of 5 metres;
and wherein
the glazing passes ECE Regulation 43 standard for penetration resistance of laminated windscreens using a 2.26 kg ball that is dropped from a height of 4.0 metres, or that passes the corresponding ANSI Z26.1 standard, where the drop height is 3.66 metres;
and wherein
the glazing material is glass, and the glass is one of annealed, semi-toughened or semi-tempered glass;
each of the first and second plies are 1.6 mm or 1.8 mm thick;
the thickness of the interlayer is between 0.3 mm and 0.65 mm;
the glazing is from 3.5 mm to 4.3 mm thick;
the interlayer is a PVB (polyvinyl butyral) interlayer; and
the interlayer is a single-layer interlayer.

2. An automotive glazing according to claim 1, wherein the glazing material is annealed glass with a thickness of 1.8 mm.

3. An automotive glazing according to claim 1 or claim 2 that passes all of the above tests.

4. An automotive glazing according to any preceding claim that has a mean break height of greater than 4.5 m when impacted by a 2.26 kg ball.

5. An automotive glazing according to any preceding claim that is from 3.8 mm thick to 4.2 mm thick.

6. An automotive glazing according to any preceding claim that is from 3.9 mm to 4.1 mm thick.

7. An automotive glazing according to any preceding claim that is a door window or a side window.

8. Use of an automotive glazing according to any preceding claim as a replacement or substitution for a single ply toughened or tempered glazing in a vehicle.

9. Use of an automotive glazing according to claim 8, wherein the glazing comprises a vehicle sidelight, rooflight or backlight.

## Patentansprüche

1. Automobilverglasung mit einer Dicke, die zum Ersetzen einer einlagigen vorgespannten oder gehärteten Verglasung in einem Fahrzeug geeignet ist, wobei die Verglasung aus einer ersten und einer zweiten Lage eines Verglasungsmaterials mit einer dazwischen laminierten Zwischenschicht besteht, **dadurch gekennzeichnet, dass** die Verglasung mindestens einen der folgenden Tests besteht:
a) Test 9 nach ANSI-Norm Z26.1 (1996) unter Verwendung eines 196 bis 201 g schweren Stahlpfeils, der aus einer Höhe von 9,14 m fallen gelassen wird;
b) Test 12 nach ANSI-Norm Z26.1 (1996) unter Verwendung einer 224 bis 230 g schweren Stahlkugel, die aus einer Höhe von 9,14 m fallen gelassen wird, und
c) der Kugelschlagtest nach ECE-Regelung Nr. 43 für eine 225 bis 229 g schwere Stahlkugel, die aus einer Höhe von 5 Metern fallen gelassen wird;
und wobei
die Verglasung die Norm der ECE-Regelung Nr. 43 für den Durchstoßwiderstand von Verbundglas-Windschutzscheiben unter Verwendung einer aus einer Höhe von 4,0 m fallen gelassenen 2,26 kg schweren Kugel oder die entsprechende Norm ANSI Z26.1, bei der die Fallhöhe 3,66 m beträgt, erfüllt;
und wobei
das Verglasungsmaterial Glas ist und das Glas ein wärmebehandeltes, ein halb vorgespanntes oder ein halb gehärtetes Glas ist;
jede der ersten und zweiten Lagen 1,6 mm oder 1,8 mm dick ist;
die Dicke der Zwischenschicht zwischen 0,3 mm und 0,65 mm liegt;
die Verglasung zwischen 3,5 mm und 4,3 mm dick ist;
die Zwischenschicht eine PVB (Polyvinylbutyral)-Zwischenschicht ist; und
die Zwischenschicht eine einschichtige Zwischenschicht ist.

2. Automobilverglasung nach Anspruch 1, bei der das Verglasungsmaterial wärmebehandeltes Glas mit einer Dicke von 1,8 mm ist.

3. Automobilverglasung nach Anspruch 1 oder Anspruch 2, die alle oben genannten Tests besteht.

4. Automobilverglasung nach einem der vorhergehenden Ansprüche, die eine mittlere Bruchhöhe von mehr als 4,5 m aufweist, wenn sie von einer 2,26 kg schweren Kugel getroffen wird.

5. Automobilverglasung nach einem der vorhergehenden Ansprüche, die zwischen 3,8 mm und 4,2 mm dick ist.

6. Automobilverglasung nach einem der vorhergehenden Ansprüche, die zwischen 3,9 mm und 4,1 mm dick ist.

7. Automobilverglasung nach einem der vorhergehenden Ansprüche, die ein Türfenster oder ein Seitenfenster ist.

8. Verwendung einer Automobilverglasung nach einem der vorhergehenden Ansprüche als Ersatz oder Substitut für eine einlagige vorgespannte oder gehärtete Verglasung in einem Fahrzeug.

9. Verwendung einer Automobilverglasung nach Anspruch 8, wobei die Verglasung ein Seitenfenster, ein Dachfenster oder ein Rückfenster eines Fahrzeugs umfasst.

## Revendications

1. Vitrage automobile présentant une épaisseur appropriée pour remplacer un vitrage trempé ou revenu à feuille unique dans un véhicule, le vitrage se composant de première et deuxième feuilles d'un matériau de vitrage présentant une couche intermédiaire stratifiée entre celles-ci ; **caractérisé en ce que** le vitrage répond à au moins l'un des tests suivants :
a) test 9 de la norme ANSI Z26.1 (1996) à l'aide d'une fléchette d'acier 196 à 201 g tombée d'une hauteur de 9,14 mètres ;
b) test 12 de la norme ANSI Z 26.1 (1996) à l'aide d'une bille d'acier de 224 à 230 g tombée d'une hauteur de 9,14 mètres ; et
c) le test de résistance aux impacts de billes de la réglementation ECE numéro 43, pour une bille d'acier de 225 à 229 g tombée d'une hauteur de 5 mètres ;
et dans lequel
le vitrage satisfait à la norme 43 de la réglementation ECE pour la résistance à la pénétration de parebrises à l'aide d'une bille de 2,26 kg qui tombe d'une hauteur de 4,0 mètres, ou qui satisfait à la norme ANSI Z26.1 correspondante, où la hauteur de chute est de 3,66 mètres ;
et dans lequel
le matériau de vitrage est du verre, et le verre est l'un parmi du verre recuit, semi-revenu ou semi-trempé ;
chacune des première et deuxième feuilles fait 1,6 mm ou 1,8 mm d'épaisseur ; l'épaisseur de la couche intermédiaire est comprise entre 0,3 mm et 0,65 mm ;
le vitrage fait de 3,5 mm à 4,3 mm d'épaisseur ;
la couche intermédiaire est une couche intermédiaire en PVB (butyral polyvinylique) ; et
la couche intermédiaire est une couche intermédiaire monocouche.

2. Vitrage automobile selon la revendication 1, dans lequel le matériau de vitrage est du verre recuit d'une épaisseur de 1,8 mm.

3. Vitrage automobile selon la revendication 1 ou la revendication 2 qui réussit tous les tests ci-dessus.

4. Vitrage automobile selon une quelconque revendication précédente qui présente une hauteur de rupture moyenne de plus de 4,5 m lorsqu'il est heurté par une bille de 2,26 kg.

5. Vitrage automobile selon une quelconque revendication précédente qui fait de 3,8 mm d'épaisseur à 4,2 mm d'épaisseur.

6. Vitrage automobile selon une quelconque revendication précédente qui fait de 3,9 mm à 4,1 mm d'épaisseur.

7. Vitrage automobile selon une quelconque revendication précédente qui est une fenêtre de porte ou une fenêtre de côté.

8. Utilisation d'un vitrage automobile selon une quelconque revendication précédente en tant que remplacement ou substitution pour un vitrage trempé ou revenu à feuille unique dans un véhicule.

9. Utilisation d'un vitrage automobile selon la revendication 8, dans laquelle le vitrage comprend une fenêtre latérale, une fenêtre de toit ou une lunette arrière de véhicule.
